# DEMANDE DE BREVET EUROPEEN

(11) **EP 4 811 600 A1**
(43) Date de publication de la demande: **23.09.2026**
(21) Numéro de dépôt: 26161536.3
(22) Date de dépôt: 02.03.2026
(51) Int. Cl.: H02J 7/62, H02J 50/10

(54) **ALIMENTATION D'UN DISPOSITIF ELECTRONIQUE**

(30) Priorité: 04.03.2025 FR 2502169
(71) Demandeur: STMicroelectronics International N.V., 1228 Plan-les-Ouates, Geneva (CH)
(72) Inventeur: GOULIER, Julien, 38000 GRENOBLE (FR); DE ARAUJO PEREIRA, Lucas Henrique, 38240 MEYLAN (FR); LEDUC, Bruno, 38500 VOIRON (FR); JOISSON, Marc, 38320 BRIE ET ANGONNES (FR)
(74) Mandataire: Cabinet Beaumont

(57) **Abrégé**

La présente description concerne un circuit d'alimentation (100) comprenant :
- un limiteur de tension (103) comprenant une fonction de mesure de courant, adapté à limiter une première tension d'alimentation (VRECT100) et à fournir une information (Sense100) concernant un courant d'alimentation (Iload100) ; et
- une unité de distribution d'alimentation (104) adaptée à recevoir ladite première tension d'alimentation (VRECT100) et ladite information (Sense100).

## Description

### Domaine technique

La présente description concerne de façon générale les systèmes et dispositifs électroniques, et en particulier l'alimentation en énergie de tels systèmes et dispositifs électroniques. La présente description se rapporte de façon plus particulière à la gestion de l'alimentation de composants électroniques d'un dispositif électronique à partir d'une alimentation sans fil et d'une batterie.

### Technique antérieure

Il existe de nos jours différentes façons d'alimenter en énergie les composants électroniques d'un dispositif électronique. Il est possible d'utiliser une alimentation filaire, par exemple reliée à une source d'alimentation stable et fiable comme le secteur, mais ce type d'alimentation implique, dans la plupart des cas, une position relativement fixe du dispositif électronique.

Il est aussi possible d'équiper le dispositif électronique d'une batterie et/ou d'utiliser une source d'alimentation sans fil.

Il serait souhaitable de pouvoir améliorer au moins certains aspects des gestions d'alimentation en énergie connues des dispositifs électroniques, et en particulier des gestions d'alimentation utilisant une source d'alimentation sans fil et une batterie.

### Résumé de l'invention

Il existe un besoin pour un circuit d'alimentation, d'un dispositif électronique, adapté à gérer une source d'alimentation sans fil et une batterie.

Il existe un besoin pour un procédé d'alimentation, d'un dispositif électronique, adapté à gérer une source d'alimentation sans fil et une batterie.

Un mode de réalisation pallie tout ou partie des inconvénients des circuits d'alimentation connus.

Selon un premier aspect, un mode de réalisation prévoit un circuit d'alimentation comprenant :
- un limiteur de tension comprenant une fonction de mesure de courant, adapté à limiter une première tension d'alimentation et à fournir une information concernant un courant d'alimentation ; et
- une unité de distribution d'alimentation adaptée à recevoir ladite première tension d'alimentation et ladite information.

Un mode de réalisation prévoit un procédé d'alimentation mettant en oeuvre un circuit d'alimentation comprenant :
- un limiteur de tension comprenant une fonction de mesure de courant, adapté à limiter une première tension d'alimentation et à fournir une information concernant un courant d'alimentation ; et
- une unité de distribution d'alimentation adaptée à recevoir ladite première tension d'alimentation et ladite information.

Selon un mode de réalisation, la première tension d'alimentation provient d'une antenne radiofréquence.

Selon un mode de réalisation, l'unité de distribution d'alimentation est adaptée à recevoir une deuxième tension d'alimentation de la part d'une batterie.

Selon un mode de réalisation, ladite information est une information de comparaison dudit courant d'alimentation à un courant récupéré par ledit limiteur de tension pendant qu'il limite la première tension d'alimentation.

Selon un mode de réalisation, l'unité de distribution d'alimentation comprend un chargeur adapté à charger ladite batterie.

Selon un mode de réalisation, ledit chargeur est adapté à alimenter au moins un composant électronique.

Selon un mode de réalisation, l'unité de distribution d'alimentation comprend une unité de gestion d'alimentation adaptée à alimenter au moins une puce électronique.

Selon un mode de réalisation, l'unité de gestion d'alimentation est adaptée à alimenter au moins deux puces électroniques.

Un autre mode de réalisation prévoit un dispositif électronique comprenant un circuit décrit précédemment.

Selon un mode de réalisation, le dispositif comprend, en outre, une batterie.

Selon un mode de réalisation, le dispositif comprend, en outre, une source d'alimentation sans fil.

Selon un second aspect, un mode de réalisation prévoit un circuit d'alimentation comprenant :
- un limiteur de tension comprenant une fonction de mesure de courant, adapté à limiter une première tension d'alimentation ; et
- une unité de gestion d'alimentation adaptée à recevoir ladite première tension d'alimentation.

Un autre mode de réalisation prévoit un procédé d'alimentation mettant en oeuvre un circuit d'alimentation comprenant :
- un limiteur de tension comprenant une fonction de mesure de courant, adapté à limiter une première tension d'alimentation ; et
- une unité de gestion d'alimentation adaptée à recevoir ladite première tension d'alimentation.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un schéma d'un mode de réalisation d'un circuit d'alimentation d'un dispositif électronique selon un premier aspect ;
la figure 2 représente un graphique illustrant le fonctionnement du mode de réalisation de la figure 1 ;
la figure 3 représente un exemple plus détaillé du mode de réalisation de la figure 1 ;
la figure 4 représente un schéma d'un mode de réalisation d'un circuit d'alimentation d'un dispositif électronique selon un deuxième aspect ;
la figure 5 représente un graphique illustrant le fonctionnement du mode de réalisation de la figure 4 ;
la figure 6 représente un exemple plus détaillé du mode de réalisation de la figure 4 ; et
la figure 7 représente un schéma d'un autre mode de réalisation d'un circuit d'alimentation d'un dispositif électronique selon le deuxième aspect.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concernent l'alimentation en énergie d'un dispositif électrique comprenant plusieurs sources d'énergie dont une source d'alimentation sans fil et une batterie. Un premier aspect de l'invention concerne l'alimentation d'un tel dispositif et plus particulièrement l'utilisation d'une information fournie par un limiteur de tension pour commander un chargeur d'une batterie. Un deuxième aspect de l'invention concerne l'utilisation de cette information fournie par le limiteur de tension pour commander une unité de gestion de l'alimentation de composants externes du dispositif électronique, comme des puces électroniques.

De plus, les modes de réalisation décrits ci-dessus sont particulièrement adaptés pour être utilisés dans tout type de marchés industriels où une alimentation utilisant un source d'alimentation sans fil est nécessaire. Plus particulièrement, un tel circuit d'alimentation peut être destiné à :
- l'industrie automobile, par exemple dans le domaine de l'électrification automobile ou dans le domaine des systèmes avancés d'aide à la conduite (Advanced Driver Assistance Systems - ADAS) ;
- le secteur industriel, par exemple dans le domaine de l'énergie verte, dans le domaine de l'électrification des infrastructures, de l'internet des objets (Internet of Things
- IoT) et des maisons intelligentes (SmartHome), où la consommation d'électricité et d'énergie et l'échange de données sont des éléments clés ;
- l'industrie de l'électronique personnelle, par exemple dans le domaine de la téléphonie mobile et de l'internet des objets (Internet of Things - IoT), ainsi que dans le domaine des interfaces haut débit ; et
- l'industrie des équipements de communication, des ordinateurs et des périphériques, par exemple dans le domaine des infrastructures et des centres de données (Data Centers), et dans le domaine des satellites en orbite terrestre basse (Low Earth Orbit - LEO).

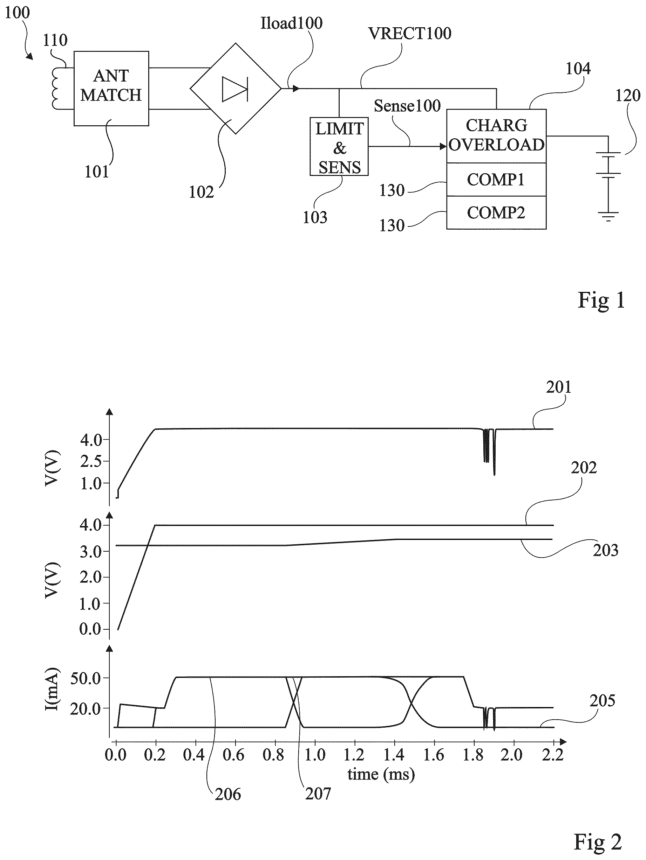

La figure 1 est un schéma électronique d'un mode de réalisation d'un circuit d'alimentation 100 d'un dispositif électronique selon un premier aspect.

Le circuit d'alimentation 100 fait partie d'un dispositif électronique (non représenté en figure 1) adapté à être alimenté par au moins deux sources d'alimentation différentes. La présente description concerne également le dispositif électronique comprenant le circuit d'alimentation 100.

Selon un mode de réalisation, une première source d'alimentation est une source d'alimentation sans fil représentée en figure 1 par une antenne 110. On peut également considérer que l'antenne 110 fait partie du circuit d'alimentation 100. Selon un exemple, l'antenne 110 est adaptée à récolter de l'énergie par exemple à partir d'un champ électromagnétique, comme un champ radiofréquence. Selon un exemple, l'antenne 110 est une bobine.

Selon un mode de réalisation, une deuxième source d'alimentation est une source d'alimentation interne comme une batterie 120 du dispositif électronique qui est externe au dispositif électronique.

Selon un exemple, le circuit d'alimentation 100 comprend un circuit 101 (ANT MATCH) d'adaptation de l'impédance de l'antenne 110 et un pont redresseur de tension 102. Selon un exemple, le circuit 101 est disposé entre les deux bornes de la bobine formant l'antenne 110. Selon un exemple, le pont redresseur de tension 102 est disposé entre des bornes de sortie du circuit 101. Selon un exemple, le pont redresseur de tension est un pont de diodes bien connus de la personne du métier. Une sortie du pont 102 est adaptée à fournir un courant d'alimentation Iload100 et une tension d'alimentation VRECT100.

Selon un mode de réalisation, le circuit 100 comprend, en outre, un circuit 103 (LIMIT & SENS) limiteur de tension adapté à limiter la tension VRECT100. Ce circuit 103 a pour effet de garder la tension VRECT100 relativement constante par rapport aux variations du champs électromagnétique capté par l'antenne 110. Cependant, il peut arriver que le courant Iload100 présente des pics de courant dus, par exemple, à l'arrêt de la charge de la batterie. De tels pics de courant peuvent, par ailleurs, modifier l'impédance de l'antenne et activer, par erreur, des fonctionnalités de sécurité du dispositif électronique qui émet le champ électromagnétique qui empêche son bon fonctionnement. Pour pallier ce problème, le circuit 103 comprend, en outre, une fonctionnalité de mesure du courant récupéré par le limiteur de tension pour rendre la tension d'alimentation VRECT100 constante, et à fournir cette mesure du courant via une information Sense100.

Selon un mode de réalisation, le circuit 100 comprend, en outre, une unité de distribution d'énergie 104, comme un chargeur 104 (CHARG OVERLOAD), adapté à charger la batterie 120 et à fournir de l'énergie à des composants 130 (COMP1, COMP2) du dispositif électronique comprenant le circuit 100. Ce chargeur 104 est adapté à recevoir le courant d'alimentation Iload100, la tension d'alimentation VRECT100, et l'information Sense100. Selon un mode de réalisation, le chargeur 104 comprend une fonction de surcharge lui permettant de limiter le courant de charge de la batterie. Selon un mode de réalisation, l'information Sense100 est utilisé par le chargeur 104 pour savoir s'il doit effectivement mettre en oeuvre sa fonctionnalité de surcharge ou non.

Plusieurs modes de fonctionnement du circuit 100 sont possibles.

Dans un premier cas, si l'information Sense100 indique que le courant récupéré par le limiteur de tension 100 est suffisant alors le courant Iload100 et la tension d'alimentation VRECT100 sont utilisés pour fournir l'alimentation du chargeur 104, qui charge la batterie 120 avec le courant maximum permis. L'énergie récupérée en trop par l'antenne 110 est récupérée par le limiteur de tension 103.

Dans un deuxième cas, si l'information Sense100 indique que le courant récupéré par le limiteur de tension 100 n'est pas suffisant alors le courant Iload100 et la tension d'alimentation VRECT100 sont utilisés pour fournir l'alimentation du chargeur 104 qui limite le courant de charge de la batterie 120. Le chargeur 104 utilise alors l'intégralité du courant disponible pour charger la batterie sans faire varier la tension VRECT100.

La présente description concerne, en outre, un procédé d'alimentation utilisant le circuit d'alimentation 100 décrit ici.

La figure 2 est un graphique illustrant le fonctionnement du circuit 100 décrit en relation avec la figure 1.

Le graphique de la figure 2 comprend :
- une courbe 201 représentant l'évolution de la tension en sortie de l'antenne 110 ;
- une courbe 202 représentant l'évolution de la tension VRECT100 ;
- une courbe 203 représentant l'évolution d'une tension de sortie de la batterie 120 ;
- une courbe 205 représentant l'évolution du courant délivré par la batterie 120 ;
- une courbe 206 représentant l'évolution du courant Iload100 fourni par le circuit 102 ; et
- une courbe 207 représentant l'évolution du courant dissipé dans le limiteur de tension 103.

Il apparait sur ce graphique que la tension VRECT100 reste constante pendant la charge de la batterie 120 et que l'intégralité du courant disponible est utilisé pour charger la batterie 120. La charge de la batterie n'est mise en oeuvre qu'une fois que la tension VRECT100 mesurée par le circuit 103 est à un niveau haut constant.

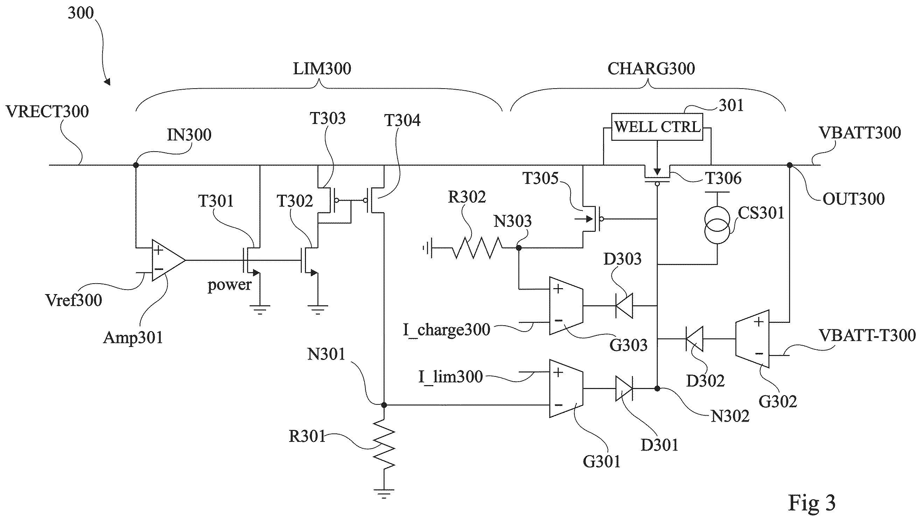

La figure 3 est un exemple pratique de réalisation du mode de réalisation de la figure 1. La figure 3 illustre donc une circuit d'alimentation 300 du type du circuit 100 décrit en relation avec la figure 1.

Selon un mode de réalisation, le circuit 300 comprend un circuit limiteur de tension LIM300 et un chargeur CHARG300. Le circuit 300 reçoit, sur un noeud d'entrée IN300, une tension VRECT300 du type de la tension VRECT100, par exemple de la part d'un pont redresseur de tension non représenté en figure 3. Le circuit 300 fournit, sur un noeud de sortie OUT300, une tension VBATT300 destinée à charger une batterie.

Selon un exemple, le limiteur LIM300 comprend un amplificateur Amp301 utilisé comme un comparateur. Une première entrée + de l'amplificateur Amp301 est reliée, de préférence connectée, au noeud d'entrée IN300, et une deuxième entrée - de l'amplificateur Amp301 est adaptée à recevoir une tension de référence de comparaison Vref300.

Selon un exemple, le limiteur LIM300 comprend, en outre, deux transistors T301 et T302, par exemple des transistors MOS à canal N, ou transistors NMOS. Une borne de drain du transistor T301 est reliée, de préférence connectée, au noeud d'entrée IN300, et une borne de source du transistor T301 est reliée, de préférence connectée, à un noeud adapté à recevoir une tension de référence, par exemple la masse. Une borne de grille du transistor T301 est reliée, de préférence connectée, à une borne de sortie de l'amplificateur Amp301 et à la borne de grille du transistor T302. Une borne de source du transistor T302 est reliée, de préférence connectée, au noeud adapté à recevoir la tension de référence.

Selon un exemple, le limiteur LIM300 comprend, en outre, deux transistors T303 et T304, par exemple des transistors MOS à canal P, ou transistors PMOS. Les transistors T303 et T304 sont montés en miroir de courant. Des bornes de source des transistors T303 et T304 sont reliées, de préférence connectées, ensemble et au noeud d'entrée IN300. Des bornes de grille des transistors T303 et T304 sont reliées, de préférence connectées, ensemble et à la borne de drain du transistors T303. La borne de drain du transistor T303 est reliée, de préférence connectée, à la borne de drain du transistor T302. La borne de drain du transistor T304 est reliée, de préférence connectée, à un noeud N301.

Selon un exemple, le limiteur LIM300 comprend, en outre, une résistance R301, un transconducteur G301 et une diode D301. Une première borne de la résistance R301 est reliée, de préférence connectée, au noeud N301 et une deuxième borne de la résistance R301 est reliée, de préférence connectée, au noeud recevant la tension de référence. Une première borne + du transconducteur G301 est adaptée à recevoir une tension limite I_Lim300, et une deuxième borne - du transconducteur G301 est reliée, de préférence connectée, au noeud N301. Une borne d'anode de la diode D301 est reliée, de préférence connectée, à une borne de sortie du transconducteur G301, et une borne de cathode de la diode D301 est reliée, de préférence connectée, à un noeud N302.

Selon un exemple, le chargeur CHARG300 comprend un transconducteur G302 et une diode D302. Une première borne + du transconducteur G302 est reliée, de préférence connectée, au noeud de sortie OUT300, et une deuxième borne - du transconducteur G302 est adaptée à recevoir une tension de seuil VBATT_T300 représentant la tension de sortie à atteindre pour la batterie. Une borne d'anode de la diode D302 est reliée, de préférence connectée, à une borne de sortie du transconducteur G302, et une borne de cathode de la diode D302 est reliée, de préférence connectée, à un noeud N302.

Selon un exemple, le chargeur CHARG300 comprend, en outre, un transconducteur G303 et une diode D303. Une première borne + du transconducteur G303 est reliée, de préférence connectée, à un noeud N303, et une deuxième borne - du transconducteur G303 est adaptée à recevoir une tension Icharge300 représentant le courant de charge requis par le chargeur CHARG300 pour charger la batterie. Une borne de cathode de la diode D303 est reliée, de préférence connectée, à une borne de sortie du transconducteur G303, et une borne d'anode de la diode D303 est reliée, de préférence connectée, à un noeud N302.

Selon un exemple, le chargeur CHARG300 comprend, en outre, une source de courant CS301 adaptée à fournir un courant au noeud N302.

Selon un exemple, le chargeur CHARG300 comprend, en outre, deux transistors T305 et T306, une résistance R302 et un circuit de commande 301 (WELL CTRL). Selon un exemple, les transistors T305 et T306 sont des transistors MOS à canal P. Selon un exemple, une première borne de conduction du transistor T305 est reliée, de préférence connectée, au noeud d'entrée IN300, et une deuxième borne de conduction du transistor T305 est reliée, de préférence connectée, au noeud N303. Une borne de grille du transistors T305 est reliée, de préférence connectée, à la borne de grille du transistor T306 et au noeud N302. Selon un exemple, une première borne de conduction du transistor T306 est reliée, de préférence connectée, au noeud d'entrée IN300, et une deuxième borne de conduction du transistor T306 est reliée, de préférence connectée, au noeud de sortie OUT300. Une première borne de la résistance R302 est reliée, de préférence connectée, au noeud N303, et une deuxième borne de conduction de la résistance R302 est reliée, de préférence connectée, au noeud recevant la tension de référence. Le circuit de commande 301 est adapté à commander le transistor T306. Pour cela, et selon un exemple, le circuit de commande 301 est relié en parallèle avec les bornes de conduction du transistor T306, et est adapté à fournir une tension de commande au substrat du transistor T306.

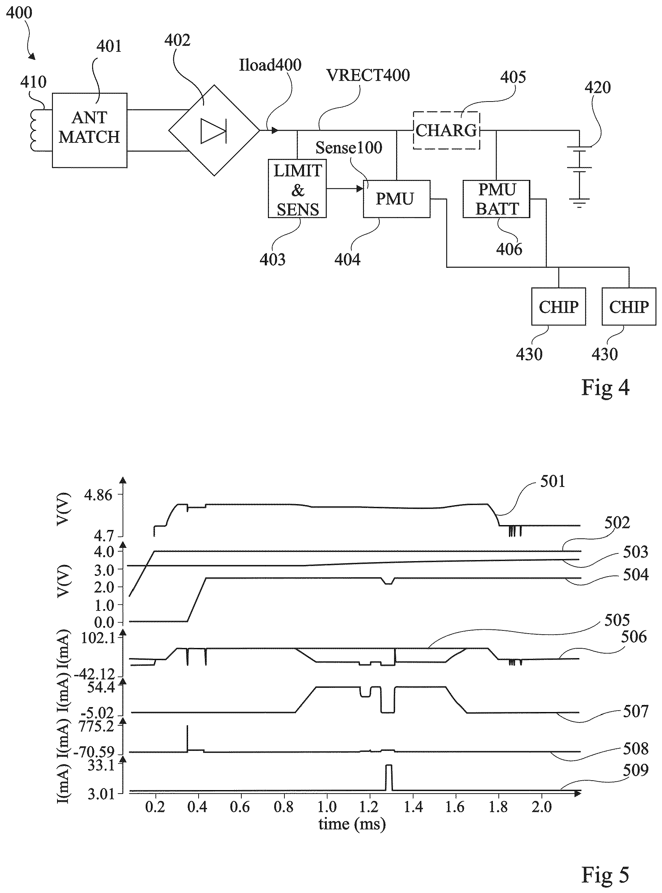

La figure 4 est un schéma électronique d'un premier mode de réalisation d'un circuit d'alimentation 400 d'un dispositif électronique selon un deuxième aspect.

Le circuit d'alimentation 400 fait partie d'un dispositif électronique (non représenté en figure 1) adapté à être alimenté par au moins deux sources d'alimentation différentes. La présente description concerne également le dispositif électronique comprenant le circuit d'alimentation 400.

Selon un mode de réalisation, une première source d'alimentation est une source d'alimentation sans fil représentée en figure 4 par une antenne 410. On peut également considérer que l'antenne 410 fait partie du circuit d'alimentation 400. Selon un exemple, l'antenne 410 est adaptée à récolter de l'énergie par exemple à partir d'un champ électromagnétique, comme un champ radiofréquence. Selon un exemple, l'antenne 410 est une bobine.

Selon un mode de réalisation, une deuxième source d'alimentation est une source d'alimentation interne comme une batterie 400 comprise dans le dispositif électronique.

Le circuit d'alimentation 400 est similaire au circuit d'alimentation 100 décrit en relation avec la figure 1. Les éléments communs aux circuits 100 et 400 ne sont pas décrits de nouveau en détail. Seules les différences entre les circuits 100 et 400 sont mises en exergue.

Selon un exemple, comme le circuit 100, le circuit 400 comprend :
- un circuit 401 (ANT MATCH) d'adaptation de l'impédance de l'antenne 410, du type du circuit 101 de la figure 1 ;
- un pont redresseur de tension 402, du type du pont redresseur 102 de la figure 1, adapté à fournir un courant d'alimentation Iload400 et une tension d'alimentation VRECT400 ; et
- un circuit 403 (LIMIT & SENS) limiteur de tension, du type du circuit 103 de la figure 1, adapté à limiter la tension VRECT400 et à fournir une information Sense400 sur la valeur du courant Iload400 dans le limiteur de tension.

Selon un mode de réalisation, le circuit 400 comprend, en outre, une unité de distribution d'énergie 104, comme une première unité de gestion d'alimentation 404 (PMU), adaptée à fournir une tension d'alimentation à une ou plusieurs puces 430 du dispositif électronique comprenant le dispositif 400. Selon un mode de réalisation, l'unité 404 est adaptée à recevoir la tension d'alimentation VRECT400, mais est aussi adaptée à recevoir l'information Sense400 fournie par le limiteur de tension 403. L'unité 404 est adaptée à prendre en compte l'information Sense400 pour mettre en oeuvre l'alimentation de la ou des puces 430.

Selon un exemple, le circuit 400 comprend, en outre, de manière optionnelle, un chargeur 405 (CHARG) adaptée à charger la batterie 420 en utilisant le courant d'alimentation Iload400 et la tension d'alimentation VRECT400. Pour cela, le chargeur comprend une entrée recevant le courant d'alimentation Iload400 et la tension d'alimentation VRECT400, et une sortie reliée, de préférence connectée, à la batterie 420.

Selon un exemple, le circuit 400 comprend, en outre, une deuxième unité de gestion d'alimentation 406 (PMU BATT) adaptée à fournir une tension d'alimentation à la ou les puces 430 du dispositif électronique comprenant le dispositif 400 en utilisant de l'énergie délivrée par la batterie 420.

Plusieurs modes de fonctionnement du circuit 400 sont possibles.

Dans un premier cas, si l'information Sense400 indique que le courant récupéré par le limiteur de tension 400 est suffisant pour alimenter la ou les puces 430. Ainsi, seuls le courant Iload400 et la tension d'alimentation VRECT400 sont utilisés pour fournir l'alimentation de la ou des puces 430. Autrement dit, la batterie 420 n'est pas utilisée. L'énergie récupérée en trop par l'antenne 410 est dirigée vers le limiteur de tension 403.

Dans un deuxième cas, si l'information Sense400 indique que le courant récupéré par le limiteur de tension 400 n'est pas suffisant pour alimenter la ou les puces 430. Ainsi, le courant Iload400 et la tension d'alimentation VRECT400 et de l'énergie fournie par la batterie sont utilisés pour fournir l'alimentation de la ou des puces 430. Autrement dit, les deux unités de gestion d'alimentation 404 et 406 sont utilisés pour fournir de l'énergie à la ou les puces 430. Des variations peuvent apparaître au niveau de la tension d'alimentation de la ou des puces 430 mais la tension VRECT400 reste constante ce qui permet d'éviter des fausses détections de variations de champs.

Dans un troisième cas, si aucune énergie n'est récoltée par l'antenne 410 alors seule l'énergie fournie par la batterie 420 est utilisée pour alimenter la ou les puces 430.

La présente description concerne, en outre, un procédé d'alimentation utilisant le circuit d'alimentation 400 décrit ici.

La figure 5 est un graphique illustrant le fonctionnement du circuit 400 décrit en relation avec la figure 4.

Le graphique de la figure 5 comprend :
- une courbe 501 représentant l'évolution de la tension en sortie de l'antenne 410 ;
- une courbe 502 représentant l'évolution de la tension VRECT400 ;
- une courbe 503 représentant l'évolution d'une tension de sortie de la batterie 450 ;
- une courbe 504 représentant l'évolution d'une tension délivrée aux puces 430 ;
- une courbe 505 représentant l'évolution du courant ILoad400 délivré par le dispositif 402 ;
- une courbe 506 représentant l'évolution du courant de limitation du limiteur 403 ;
- une courbe 507 représentant l'évolution du courant de charge du chargeur 405 ;
- une courbe 508 représentant l'évolution du courant de sortie de l'unité de gestion d'alimentation 404 ; et
- une courbe 509 représentant l'évolution de la tension de sortie de l'unité de gestion d'alimentation 406.

Il apparait sur ce graphique que la batterie n'est utilisée que lorsque que le courant mesurée par le limiteur est à un niveau bas comme décrit précédemment.

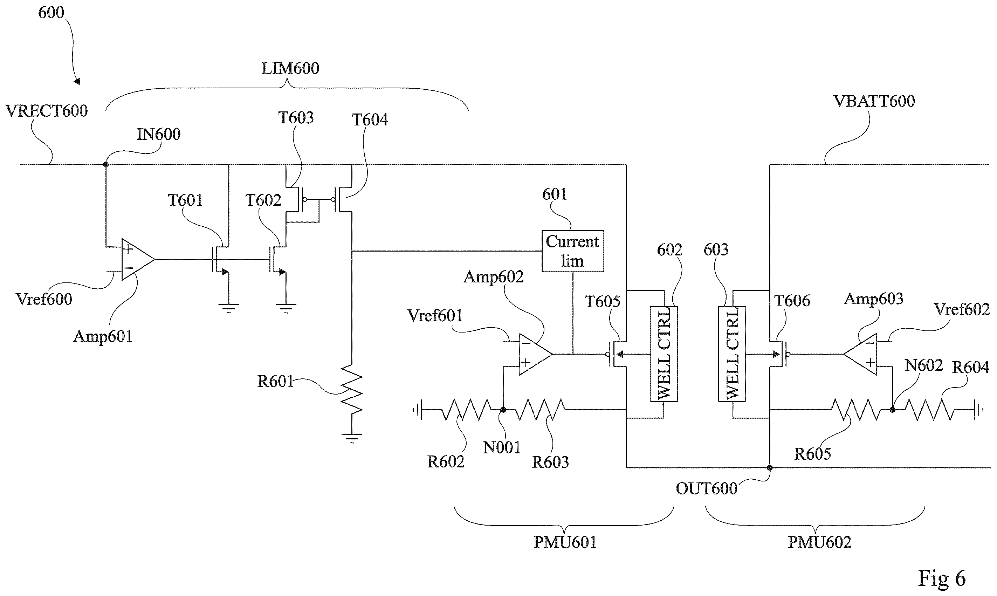

La figure 6 est un exemple pratique de réalisation du mode de réalisation de la figure 4. La figure 6 illustre donc un circuit d'alimentation 600 du type du circuit 100 décrit en relation avec la figure 4.

Le circuit d'alimentation 600 est similaire au circuit d'alimentation 300 décrit en relation avec la figure 3. Les éléments communs aux circuits 300 et 600 ne sont pas décrits de nouveau en détail. Seules les différences entre les circuits 300 et 600 sont mises en exergue.

Selon un exemple, comme le circuit 300, le circuit 600 comprend un limiteur de tension LIM600 du type du limiteur de tension LIM300 décrit en relation avec la figure 3. Plus particulièrement, le limiteur de tension de tension LIM600 comprend :
- un noeud d'entrée IN600 recevant une tension d'alimentation VRECT600, du type du noeud IN300 et de la tension d'alimentation VRECT300 de la figure 3 ;
- un amplificateur Amp601 du type de l'amplificateur Amp300 de la figure 3, recevant une tension de référence de comparaison Vref600 ; et
- quatre transistors T601, T602, T603 et T604, du même type que les transistors T301, T302, T303 et T304 de la figure 3 ;
- une résistance R601 du type de la résistance r301 de la figure 3.

Selon un mode de réalisation, le circuit 600 comprend, en outre, une unité de gestion d'alimentation PMU601 du type de l'unité 404 décrite en relation avec la figure 4.

Selon un exemple, l'unité de gestion PMU601 comprend, un amplificateur Amp602 et deux résistances R602 et R603. Une première entrée + de l'amplificateur Amp601 est reliée, de préférence connectée, à un noeud N601, et une deuxième entrée - de l'amplificateur Amp601 est adaptée à recevoir une tension de référence de comparaison Vref601. Une borne de sortie de l'amplificateur Amp601 est reliée, de préférence connectée, à une borne de sortie du limiteur de courant 601. Une première borne de la résistance R602 est reliée, de préférence connectée, à un noeud adapté à recevoir un potentiel de préférence, par exemple la masse, et une deuxième borne de la résistance R602 et reliée, de préférence connectée, au noeud N601. Une première borne de la résistance R603 est reliée, de préférence connectée, au noeud N601, et une deuxième borne de la résistance R603 et reliée, de préférence connectée, à un noeud de sortie OUT600.

Selon un exemple, l'unité de gestion PMU601 comprend, en outre, un transistor T605 et son circuit de commande 602 (WELL CTRL). Une première borne de conduction du transistor T605 est reliée, de préférence connectée, au noeud d'entrée IN600, et une deuxième borne de conduction du transistor T605 est reliée, de préférence connectée, au noeud de sortie OUT600. Une borne de commande du transistor T605 est reliée, de préférence connectée, à une borne de sortie de l'amplificateur Amp602. Le circuit de commande 602 est adapté à commander le transistor T605. Pour cela, et selon un exemple, le circuit de commande 602 est relié en parallèle avec les bornes de conduction du transistor T605, et est adapté à fournir une tension de commande au substrat du transistor T605.

De plus, selon un exemple, l'unité de gestion PMU601 comprend, en outre, un limiteur de courant 601 (Current Lim) adaptée à comprendre un transconducteur et une diode, arrangé de la même manière que le transconducteur G301 et la diode D301 de la figure 3.

Selon un mode de réalisation, le circuit 600 comprend, en outre, une unité de gestion d'alimentation PMU602 du type de l'unité 406 décrite en relation avec la figure 4.

Selon un exemple, l'unité de gestion PMU602 comprend, un amplificateur Amp603 et deux résistances R604 et R605. Une première entrée + de l'amplificateur Amp602 est reliée, de préférence connectée, à un noeud N602, et une deuxième entrée - de l'amplificateur Amp602 est adaptée à recevoir une tension de référence de comparaison Vref602. Une première borne de la résistance R604 est reliée, de préférence connectée, à un noeud adapté à recevoir un potentiel de préférence, par exemple la masse, et une deuxième borne de la résistance R604 est reliée, de préférence connectée, au noeud N602. Une première borne de la résistance R605 est reliée, de préférence connectée, au noeud N602, et une deuxième borne de la résistance R605 et reliée, de préférence connectée, à un noeud de sortie OUT600.

Selon un exemple, l'unité de gestion PMU602 comprend, en outre, un transistor T606 et son circuit de commande 603 (WELL CTRL). Une première borne de conduction du transistor T606 est reliée, de préférence connectée, à une batterie et reçoit une tension VBATT600, et une deuxième borne de conduction du transistor T606 est reliée, de préférence connectée, au noeud de sortie OUT600. Une borne de commande du transistor T606 est reliée, de préférence connectée, à une borne de sortie de l'amplificateur Amp602. Le circuit de commande 603 est adapté à commander le transistor T606. Pour cela, et selon un exemple, le circuit de commande 603 est relié en parallèle avec les bornes de conduction du transistor T606, et est adapté à fournir une tension de commande au substrat du transistor T606.

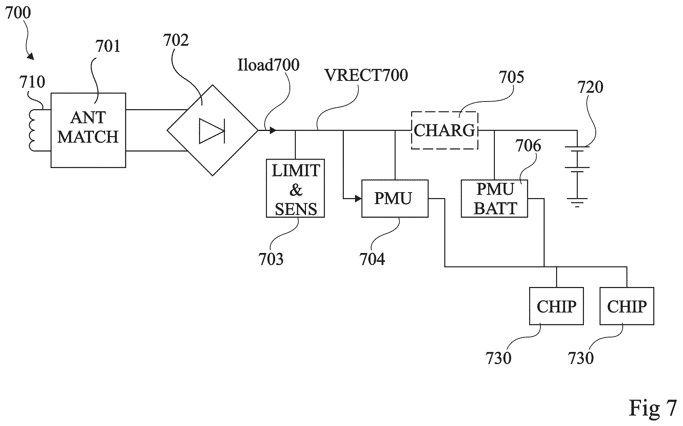

La figure 7 est un schéma électronique d'un deuxième mode de réalisation d'un circuit d'alimentation 700 d'un dispositif électronique selon un deuxième aspect.

Le circuit d'alimentation 700 fait partie d'un dispositif électronique (non représenté en figure 1) adapté à être alimenté par au moins deux sources d'alimentation différentes. La présente description concerne également le dispositif électronique comprenant le circuit d'alimentation 700.

Selon un mode de réalisation, une première source d'alimentation est une source d'alimentation sans fil représentée en figure 7 par une antenne 710. On peut également considérer que l'antenne 710 fait partie du circuit d'alimentation 700. Selon un exemple, l'antenne 710 est adaptée à récolter de l'énergie par exemple à partir d'un champ électromagnétique, comme un champ radiofréquence. Selon un exemple, l'antenne 710 est une bobine.

Selon un mode de réalisation, une deuxième source d'alimentation est une source d'alimentation interne comme une batterie 700 comprise dans le dispositif électronique.

Le circuit d'alimentation 700 est similaire au circuit d'alimentation 400 décrit en relation avec la figure 4. Les éléments communs aux circuits 400 et 700 ne sont pas décrits de nouveau en détail. Seules les différences entre les circuits 400 et 700 sont mises en exergue.

Selon un exemple, comme le circuit 400, le circuit 700 comprend :
- un circuit 701 (ANT MATCH) d'adaptation de l'impédance de l'antenne 710, du type du circuit 101 de la figure 1 ;
- un pont redresseur de tension 702, du type du pont redresseur 102 de la figure 1, adapté à fournir un courant d'alimentation Iload700 et une tension d'alimentation VRECT700 ;
- un circuit 703 (LIMIT & SENS) limiteur de tension, du type du circuit 103 de la figure 1, adapté à limiter la tension VRECT700 ;
- une unité de gestion d'alimentation 704 (PMU), du type de l'unité 404 de la figure 4 ;
- de manière optionnelle, un chargeur 705 (CHARG), du type du chargeur 405 de la figure 4 ; et
- une unité de gestion d'alimentation 706 (PMU BATT), du type de l'unité 406 de la figure 4.

La différence entre les circuits 400 et 700 est que l'unité de gestion d'alimentation 704 ne reçoit pas d'information de la part du limiteur de tension 703, mais est commandé par la valeur de la tension d'alimentation VRECT700. Dans ce cas la limitation en courant de la tension VRECT700 est commandé par la valeur de la tension VRECT700 elle-même.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Circuit d'alimentation (100 ; 400) comprenant :
- un limiteur de tension (103 ; 403) comprenant une fonction de mesure de courant, adapté à limiter une première tension d'alimentation (VRECT100 ; VRECT400) et à fournir une information (Sense100 ; Sense400) concernant un courant d'alimentation (Iload100 ; Iload400) ; et
- une unité de distribution d'alimentation (104 ; 404) adaptée à recevoir ladite première tension d'alimentation (VRECT100 ; VRECT400) et ladite information (Sense100 ; Sense400).

2. Procédé d'alimentation mettant en oeuvre un circuit d'alimentation (100 ; 400) comprenant :
- un limiteur de tension (103 ; 403) comprenant une fonction de mesure de courant, adapté à limiter une première tension d'alimentation (VRECT100 ; VRECT400) et à fournir une information (Sense100 ; Sense400) concernant un courant d'alimentation (Iload100 ; Iload400) ; et
- une unité de distribution d'alimentation (104 ; 404) adaptée à recevoir ladite première tension d'alimentation (VRECT100 ; VRECT400) et ladite information (Sense100 ; Sense400).

3. Circuit selon la revendication 1, ou procédé selon la revendication 2, dans lequel la première tension d'alimentation (VRECT100 ; VRECT400) provient d'une antenne radiofréquence.

4. Circuit selon la revendications 1 ou 3, ou procédé selon la revendication 2 ou 3, dans lequel ladite information (Sense100 ; Sense400) est une information de comparaison dudit courant d'alimentation (Iload100, Iload400) à un courant récupéré par ledit limiteur de tension (103 ; 403) pendant qu'il limite la première tension d'alimentation (VRECT100 ; VRECT400).

5. Circuit selon l'une quelconque des revendications 1, 3 ou 4, ou procédé selon l'une quelconque des revendications 2 à 4, dans lequel l'unité de distribution d'alimentation (104) est adaptée à recevoir une deuxième tension d'alimentation de la part d'une batterie (120).

6. Circuit ou procédé selon la revendication 5, dans lequel l'unité de distribution d'alimentation comprend un chargeur (104) adapté à charger ladite batterie (120).

7. Circuit ou procédé selon la revendication 6, dans lequel ledit chargeur (104) est adapté à alimenter au moins un composant électronique (130).

8. Circuit selon l'une quelconque des revendications 1, 3 à 7, ou procédé selon l'une quelconque des revendications 2 à 7, dans lequel l'unité de distribution d'alimentation comprend une unité de gestion d'alimentation (404) adaptée à alimenter au moins une puce électronique (130).

9. Circuit ou procédé selon la revendication 8, dans lequel l'unité de gestion d'alimentation (404) est adaptée à alimenter au moins deux puces électroniques (130).

10. Dispositif électronique comprenant un circuit selon l'une quelconque des revendications 1, 3 à 9.

11. Dispositif électronique selon la revendication 10, comprenant, en outre, une batterie.

12. Dispositif électronique selon la revendication 10 ou 11, comprenant, en outre, une source d'alimentation sans fil.

13. Circuit d'alimentation (700) comprenant :
- un limiteur de tension (703) comprenant une fonction de mesure de courant, adapté à limiter une première tension d'alimentation (VRECT700) ; et
- une unité de gestion d'alimentation (704) adaptée à recevoir ladite première tension d'alimentation (VRECT700).

14. Procédé d'alimentation mettant en oeuvre un circuit d'alimentation (700) comprenant :
- un limiteur de tension (703) comprenant une fonction de mesure de courant, adapté à limiter une première tension d'alimentation (VRECT700) ; et
- une unité de gestion d'alimentation (704) adaptée à recevoir ladite première tension d'alimentation (VRECT700).
